# EUROPÄISCHE PATENTSCHRIFT

(11) **EP 4 500 040 B1**
(45) Veröffentlichungstag und Bekanntmachung des Hinweises auf die Patenterteilung: **29.07.2026**
(21) Anmeldenummer: 23714669.1
(22) Anmeldetag: 22.03.2023
(51) Int. Cl.: F16C 19/52, F16C 41/00, G01M 13/045, G01N 29/04, F03D 80/70, F03D 1/06, F03D 17/00, F16C 19/06

(54) **WÄLZLAGER MIT EINER ULTRASCHALLSENSORANORDNUNG ZUR ÜBERWACHUNG VON LAUFBAHNSCHÄDEN**
ROLLING ELEMENT BEARING HAVING AN ULTRASONIC SENSOR ASSEMBLY FOR MONITORING RACEWAY DAMAGE
PALIER À ROULEMENT DOTÉ D'UN ENSEMBLE CAPTEUR ULTRASONORE POUR SURVEILLER UN ENDOMMAGEMENT DE CHEMIN DE ROULEMENT

(30) Priorität: 24.03.2022 DE 102022202934
(43) Veröffentlichungstag der Anmeldung: 05.02.2025
(73) Patentinhaber: Fraunhofer-Gesellschaft zur Förderung der angewandten Forschung e.V., 80686 München (DE)
(72) Erfinder: MENCK, Oliver, 27572 Bremerhaven (DE); GRASSMANN, Matthis, 27572 Bremerhaven (DE)
(74) Vertreter: Pfenning, Meinig & Partner mbB
(86) Internationale Anmeldenummer: PCT/EP2023/057395
(87) Internationale Veröffentlichungsnummer: WO 2023/180412

(56) Entgegenhaltungen:
- EP-A1- 2 626 683
- WO-A1-2013/057275
- DE-A1- 102013 106 475
- DE-A1- 102018 215 961
- US-A1- 2018 180 576

## Beschreibung

Die vorliegende Erfindung liegt auf dem Gebiet des Maschinenbaus. Sie betrifft ein Wälzlager. Mit besonderem Vorteil ist die Erfindung auf dem Gebiet der Windenergieanlagentechnik einsetzbar. Die Erfindung betrifft auch eine Windenergieanlage mit einem Wälzlager sowie ein Verfahren zum Überwachen einer Windenergieanlage.

Gemäß Stand der Technik werden Wälzlager beispielsweise in Windenergieanlagen eingesetzt, etwa als Blattlager. Sie umfassen zwei gegeneinander drehbare Ringe. Solche Wälzlager erlauben vorteilhaft die rotatorische Bewegung sehr großer Komponenten. Um diese Bewegungen umzusetzen, sind sehr leistungsstarke Antriebe und sehr hohe Drehmomente notwendig. Die Laufbahnen der Ringe, auf denen Wälzkörper abrollen, können im Betrieb beschädigt werden. Für die meisten Anwendungsfälle sind kleinere Schäden tolerierbar, allerdings entwickeln sich die Schäden im Betrieb möglicherweise hin zu einem Zustand, in dem das Lager nicht mehr gedreht werden kann oder die Sicherheit beeinträchtigt ist. Dann muss das Lager ausgetauscht werden. Bisher erfolgt eine Schadenserkennung beispielsweise über die Messung der Antriebsmomente. Bei sehr großen Wälzlagern müssen aufgrund der herrschenden hohen Reibmomente auch die Drehmomentmessungen für sehr hohe Momente ausgelegt sein. Die relative Veränderung des Moments, die durch einen Schaden im Frühstadium verursacht wird, ist demgegenüber zunächst sehr klein und liegt häufig sogar im Bereich der Messunsicherheiten. Somit ist es nicht möglich, den Schaden eindeutig und frühzeitig zu erkennen. Aus dem Stand der Technik ist es außerdem bekannt, über Änderungen in der Deformation des Lagers unter Last im Betrieb indirekt auf Verschleißschäden des Lagers zu schließen.

Die Detektion von Metallpartikeln in regelmäßig gezogenen Fettproben ist im Stand der Technik eine weitere verwendete Möglichkeit, indirekt Aussagen über den Schaden des Lagers im Inneren treffen zu können.

Die genannten bisher verwendeten Ansätze zur Schadensdetektion haben allesamt den Nachteil, dass Schäden nur unzuverlässig erkannt werden und oft keine Aussage über die Natur oder die Schwere des Schadens möglich ist.

US 2018/180576 A1 offenbart die Merkmale des Oberbegriffs von Anspruch 1.

Aufgabe der Erfindung ist es daher, die genannten Probleme zumindest teilweise zu beheben und eine frühzeitige und genaue Erkennung von Schäden zu ermöglichen. So soll es beispielsweise ermöglicht werden, den Austausch des Lagers frühzeitig zu planen oder durch Eingriffe in die Betriebsführung das Lager zu entlasten, um somit die nutzbare Betriebszeit zu verlängern.

Erfindungsgemäß wird diese Aufgabe durch ein Wälzlager gemäß Anspruch 1 oder durch ein Verfahren gemäß dem nebengeordneten Anspruch gelöst. Vorteilhafte Ausführungen ergeben sich aus den Unteransprüchen sowie aus der nachfolgenden Beschreibung und den Figuren.

Demgemäß wird ein Wälzlager mit einer Ultraschallsensoranordnung zur Überwachung von Laufbahnschäden vorgeschlagen.

Das Wälzlager umfasst einen Innenring mit einer Innenringlaufbahn, einen Außenring mit einer zu der Innenringlaufbahn opponierenden Außenringlaufbahn und zwischen dem Innenring und dem Außenring angeordnete Wälzkörper, die auf der Innenringlaufbahn und der dazu opponierenden Außenringlaufbahn abrollen.

Das Wälzlager umfasst weiterhin mindestens eine Ultraschallsensoranordnung.

Die mindestens eine Ultraschallsensoranordnung umfasst zum Beispiel eine oder mehrere Ultraschallsensoranordnungen, die an dem Innenring angeordnet sind, eingerichtet zum Emittieren von Schallwellen durch ein Volumen des Innenrings in Richtung der Innenringlaufbahn und zum Empfangen von an der Innenringlaufbahn reflektierten Schallwellen.

Alternativ oder zusätzlich umfasst die mindestens eine Ultraschallsensoranordnung eine oder mehrere Ultraschallsensoranordnungen, die an dem Außenring angeordnet sind, eingerichtet zum Emittieren von Schallwellen durch ein Volumen des Außenrings in Richtung der Außenringlaufbahn und zum Empfangen von an der Außenringlaufbahn reflektierten Schallwellen.

Die Ultraschallsensoranordnungen sind also derart konfiguriert, dass sie Schallwellen in Richtung der jeweiligen Laufbahn emittieren. Beim Auftreffen der Schallwellen auf eine Grenzfläche zwischen zwei Medien wird ein Teil der Schallwellen z.B. reflektiert und anschließend empfangen. Hieraus kann auf die Beschaffenheit der Grenzfläche und/oder auf die Dicke des durchlaufenen Materials geschlossen werden. Für die Schallwellen, die in einen Ring des Lagers emittiert werden, befindet sich der besagte Übergang zwischen zwei Medien an der Oberfläche der Laufbahn (ein erstes Medium ist hier bspw. der Lagerstahl, und ein zweites Medium ist Luft und/oder Schmierstoff). Bei der Anordnung der Ultraschallsensoren können Sender und Empfänger an der gleichen Stelle oder nebeneinander platziert werden, sie können aber auch an voneinander entfernten Orten positioniert werden, solange eine Emission von Schallwellen an den zu überwachenden Bereich der Laufbahn und ein Empfang der von dort reflektierten Schwallwellen ermöglicht ist.

Die an dem Innenring angeordnete(n) Ultraschallsensoranordnung(en) und/oder die an dem Außenring angeordnete(n) Ultraschallsensoranordnung(en) können für eine Überwachung einer Laufbahnbeschaffenheit und/oder einer Materialdicke desjenigen Ringes eingerichtet sein, an dem sie angeordnet sind.

Die einen oder mehreren Ultraschallsensoranordnungen können beispielsweise jeweils so angeordnet sein, dass Ultraschallwellen mittels eines Senders an einem der Laufbahn des jeweiligen Ringes abgewandten Punkt in den Ring eingeleitet werden, so dass sie in Richtung der Laufbahn und insbesondere in Richtung des zu überwachenden Bereichs der Laufbahn propagieren. An einer durch die zu überwachende Laufbahn gebildeten Grenzfläche können die Ultraschallwellen reflektiert werden, so dass sie nach der erfolgten Reflexion weiter innerhalb des Ringes propagieren, in Richtung des Empfängers der Ultraschallsensoranordnung, von dem sie schließlich detektiert werden. So propagieren die Ultraschallwellen durchweg im Medium des Ringes, an dem die Ultraschallsensoranordnung angeordnet ist, durch die sie emittiert und wieder detektiert werden. Möglicherweise auftretende Laufbahnveränderungen, die auf einen Schaden hindeuten können, werden so "von innen" durch die Schallwellen erfasst, wenn sich die durch die Laufbahn gebildete Grenzfläche entsprechend verändert und damit einhergehend ein reflektiertes Signal, das vom Empfänger detektiert wird, sich verändert.

Bei dem Wälzlager handelt es sich um ein Blattlager für eine Windenergieanlage.

Es kann sich auch um ein Lager für eine Bohrmaschine, insbesondere für eine Tunnelbohrmaschine, oder um ein Lager für einen Kran handeln (nicht beansprucht).

Das Wälzlager kann dabei z.B. einen Durchmesser von mindestens 1m oder mindestens 2m oder mindestens 3m oder mindestens 5m oder mindestens 6m aufweisen. Nach oben ist der Durchmesser des Lagers nicht limitiert, und kann z.B. bis zu 10m betragen.

Insbesondere bei derart großen Wälzlagern aus den genannten Bereichen des Maschinenbaus wirken große Kräfte, die es, wie eingangs erläutert, erschweren, eine indirekte Messung über Momente vorzunehmen, wobei andererseits eine besondere Notwendigkeit für eine zuverlässige Schadenserkennung besteht, um die Anlagensicherheit zu gewährleisten.

Die mindestens eine Ultraschallsensoranordnung umfasst in einer möglichen Ausführungsform zwei Ultraschallsensoranordnungen, die an radial entgegengesetzten Positionen an dem Innenring angeordnet sind. Alternativ oder zusätzlich umfasst sie zwei Ultraschallsensoranordnungen, die an radial entgegengesetzten Positionen am Außenring angeordnet sind.

Je nach Lagertyp entstehen Schäden in bestimmten Bereichen der Lager, die eine erhöhte Last aufnehmen, wobei diese in typischen Fällen nicht gleichmäßig über den Umfang verteilt ist. Etwa weisen Blattlager von Windenergieanlagen bedingt durch ihre Ausrichtung in Bezug auf das Rotorblatt und die Nabe eine Zugseite und eine Druckseite auf, an denen besonders hohe Lasten wirken. Dann können bspw. einander gegenüberliegend angeordnete Ultraschallsensoranordnungen an Zugseite und Druckseite angeordnet werden.

Die mindestens eine Ultraschallsensoranordnung umfasst mindestens 6 Ultraschallsensoranordnungen, die innerhalb eines ersten Kreisbogens von höchstens 70° angeordnet sind, wobei der Kreisbogen an der Zugseite oder an der Druckseite des Wälzlagers liegt.

Die mindestens eine Ultraschallsensoranordnung kann z.B. mindestens 3 oder mindestens 4 oder mindestens 5 Ultraschallsensoranordnungen umfassen, die innerhalb eines ersten Kreisbogens von höchstens 120° oder höchstens 90° oder höchstens 70° angeordnet sind (nicht beansprucht). Die mindestens eine Ultraschallsensoranordnung kann mindestens 6 Ultraschallsensoranordnungen umfassen, die innerhalb eines ersten Kreisbogens von höchstens 120° oder höchstens 90° angeordnet sind (nicht beansprucht).

Dadurch kann dieser Kreisbogen, in dem z.B. besonders hohe Lasten wirken, präzise überwacht werden. Zusätzlich können dann mindestens 3 oder mindestens 4 oder mindestens 5 oder mindestens 6 weitere Ultraschallsensoranordnungen innerhalb eines zweiten Kreisbogens von höchstens 120° oder höchstens 90° oder höchstens 70° angeordnet sein, wobei insbesondere der zweite Kreisbogen dem ersten Kreisbogen radial gegenüberliegt. Die Kreisbögen können dann wieder z.B. an Zugseite und/oder Druckseite liegen.

Mehrere Ultraschallsensoranordnungen können bspw. im Abstand von mindestens 3° und/oder von höchstens 5° oder von höchstens 10° oder höchstens 15° oder höchstens 20° oder höchstens 30° voneinander angeordnet sein.

Der Innenring und/oder der Außenring können eine Verzahnung aufweisen.

Die mindestens eine Ultraschallsensoranordnung kann z.B. zumindest eine Ultraschallsensoranordnung umfassen, die an einer Außenfläche des Außenrings und/oder an einer Innenfläche des Innenrings angeordnet ist. Dies kann beispielsweise bei Kegelrollenlagern ober bei Kugellagern, insbesondere bei Vierpunktlagern vorgesehen sein. Die mindestens eine Ultraschallsensoranordnung kann aber auch zumindest eine Ultraschallsensoranordnung umfassen, die an einer Oberseite oder einer Unterseite des Innenrings und/oder an einer Oberseite oder einer Unterseite des Außenrings angeordnet ist. Die letzteren Konfigurationen können insbesondere im Zusammenhang mit Rollenlagern vorgesehen sein und/oder bei Kugellagern, insbesondere bestimmten Vierpunktlagern, und/oder dann, wenn an der Außenfläche oder Innenfläche eine Verzahnung vorgesehen ist.

Die mindestens eine Ultraschallsensoranordnung kann z.B. zumindest eine Ultraschallsensoranordnung umfassen, die dafür eingerichtet ist, Schallwellen in einen außermittigen Bereich, insbesondere in einen Randbereich, der Innenringlaufbahn oder der Außenringlaufbahn zu emittieren und von dort reflektierte Schallwellen zu empfangen. Solche außermittigen Bereiche, die axial zu einer Oberseite oder Unterseite hin verschoben sind, erfahren eine besonders starke Druckbeanspruchung durch die Wälzkörper und können somit besonders anfällig für Schäden sein. Das ist insbesondere der Fall, wenn sie in einem hochbeanspruchten Bereich der Zug-oder Druckseite des Lagers liegen.

Erfindungsgemäß handelt es sich bei dem Wälzlager um ein Blattlager einer Windenergieanlage, zum Einstellen eines Blattstellwinkels. Der Innenring oder der Außenring ist dafür eingerichtet, mit einer Nabe der Windenergieanlage verbunden zu werden und der jeweils andere der beiden Ringe ist dafür eingerichtet, ein Rotorblatt der Windenergieanlage zu tragen und sich gegenüber der Nabe zu drehen.

Die hierin beschriebenen Wälzlager können z.B. Wälzkörper aufweisen, die als Rollen ausgebildet sind. Das beinhaltet z.B. die Möglichkeit, Kegelrollen oder zylindrische Rollen bereitzustellen. Die Wälzlager können z.B. auch Wälzkörper aufweisen die als Kugeln ausgebildet sind. Die Wälzlager können insbesondere als Vierpunktlager ausgebildet sein.

Die Anmeldung bezieht sich auch auf Systeme mit Wälzlagern. Insbesondere wird eine Windenergieanlage mit einem Wälzlager vorgestellt. Die anmeldungsgemäße Windenergieanlage umfasst ein Wälzlager mit den hierin beschriebenen Eigenschaften, etwa ein Wälzlager gemäß einem der Ansprüche oder ein Wälzlager gemäß dieser Beschreibung oder den Figuren. Dabei umfasst die mindestens eine Ultraschallsensoranordnung des Wälzlagers z.B. zumindest eine Ultraschallsensoranordnung, die an einer Zugseite des Wälzlagers angeordnet ist und/oder zumindest eine Ultraschallsensoranordnung, die an einer Druckseite des Wälzlagers angeordnet ist.

Bei der Windenergieanlage können die Wälzkörper als Rollen ausgebildet sein, und die mindestens eine Ultraschallsensoranordnung kann dabei in einer Ausführung zumindest eine Ultraschallsensoranordnung umfassen, die an einer Zugseite oder einer Druckseite des Wälzlagers angeordnet ist. Insbesondere kann es sich um ein Rollenlager mit zylindrischen Rollen handeln, wobei die mindestens eine Ultraschallsensoranordnung an der Zugseite angeordnet ist, wobei in einem Beispiel ausschließlich an der Zugseite ein oder mehrere Ultraschallsensoranordnungen vorhanden sind und auf der Druckseite keine. Alternativ kann es sich z.B. um ein Rollenlager mit Kegelrollen handeln, bei dem die mindestens eine Ultraschallsensoranordnung an der Druckseite angeordnet ist, wobei in einem Beispiel ausschließlich an der Druckseite ein oder mehrere Ultraschallsensoranordnungen vorhanden sind und auf der Zugseite keine.

Bei der Windenergieanlage können die Wälzkörper auch als Kugeln ausgebildet sein, wobei die mindestens eine Ultraschallsensoranordnung in möglichen Ausführungsformen zumindest eine Ultraschallsensoranordnung umfasst, die an einer Zugseite des Wälzlagers angeordnet ist und/oder zumindest eine Ultraschallsensoranordnung umfasst, die an einer Druckseite des Wälzlagers angeordnet ist.

Es wird ein Verfahren zum Überwachen einer Windenergieanlage vorgestellt. Die zu überwachende Windenergieanlage weist ein Wälzlager gemäß dieser Anmeldung als Blattlager auf. In dem Verfahren wird die Innenringlaufbahn des Innenrings und/oder die Außenringlaufbahn des Außenrings überwacht, indem die Schallwellen in ein Volumen des jeweiligen Rings emittiert werden. Dies geschieht insbesondere im Betrieb und/oder während das Wälzlager gedreht wird. Schädigungen, die im Laufe der Zeit an der Laufbahn entstehen, beeinflussen die reflektierten Schallwellen. Materialabtrag an den Laufbahnen infolge von Beanspruchung im Betrieb bewirkt dabei eine Verkleinerung des Volumens und Unregelmäßigkeiten an der Grenzfläche des Volumens. Beides kann anhand der empfangenen Schallwellen qualitativ und quantitativ überwacht werden. Eine Aussage über Position und Schwere des Schadens wird dadurch ermöglicht.

Im Rahmen des Verfahrens können Warnungen oder Eingriffe in den Betrieb einer Anlage vorgesehen sein. Entsprechend kann eine Vorrichtung, die ein erfindungsgemäßes Wälzlager umfasst, insbesondere eine Windenergieanlage, mit einer Verarbeitungseinheit ausgestattet sein, die Signale von der einen oder den mehreren Ultraschallsensoranordnungen empfängt und auswertet und bspw. Warnsignale an einen Nutzer sendet und/oder Steuersignale an die Vorrichtung sendet, um in den Betrieb der Vorrichtung einzugreifen und bspw. eine Entlastung des Lagers zu bewirken oder eine Notabschaltung vorzunehmen.

Nachfolgend wird die Erfindung anhand von Figuren beispielhaft erläutert.

Darin zeigt
- Fig. 1: ein Wälzlager, das als Blattlager einer Windenergieanlage ausgebildet ist, mit gegenüberliegend angeordneten Ultraschallsensoranordnungen an einem Außenring,
- Fig. 2: ein Wälzlager mit einer Ultraschallsensoranordnung am Außenring,
- Fig. 3: ein Wälzlager mit einer Vielzahl Ultraschallsensoranordnungen am Außenring,
- Fig. 4: ein Wälzlager mit gegenüberliegend angeordneten Ultraschallsensoranordnungen an einem Innenring,
- Fig. 5: ein Wälzlager mit einer Vielzahl Ultraschallsensoranordnungen am Innenring,
- Fig. 6: ein Wälzlager mit einer Vielzahl Ultraschallsensoranordnungen am Innenring und am Außenring,
- Fig. 7: eine Positionierung von Ultraschallsensoren an einer Druckseite eines Wälzlagers mit kugelförmigen Wälzkörpern,
- Fig. 8: eine Positionierung von Ultraschallsensoren an einer Zugseite eines Wälzlagers mit kugelförmigen Wälzkörpern, und
- Fig. 9: eine Positionierung von Ultraschallsensoren an einer Zugseite eines Wälzlagers mit rollenförmigen Wälzkörpern.

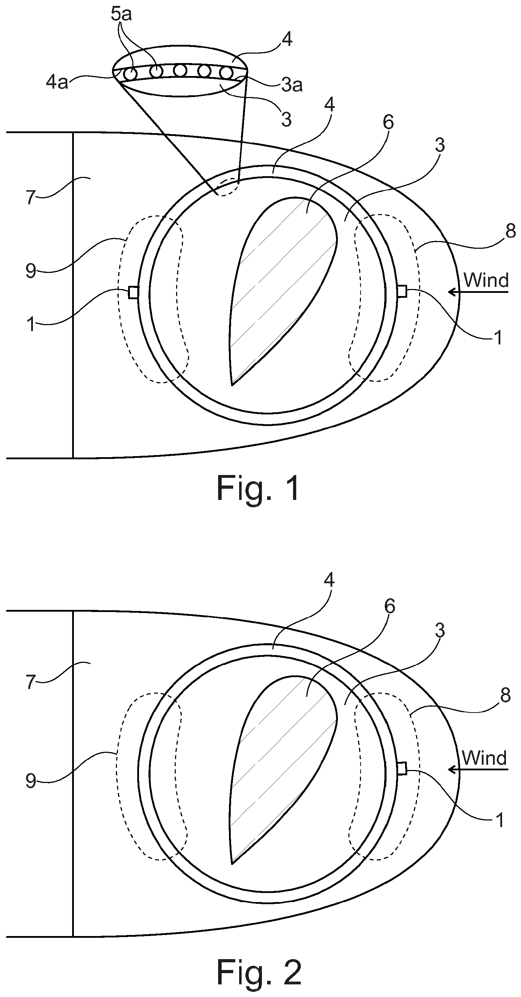

Fig. 1 zeigt schematisch eine Draufsicht auf eine Nabe 7 einer Windenergieanlage. An der Nabe 7 ist ein Rotorblatt 6 angeordnet, dessen Stellung in einer Schnittansicht verdeutlicht wird. Das Rotorblatt 6 wird von einem als Wälzlager ausgebildeten Blattlager getragen, mit dem ein Blattstellwinkel eingestellt werden kann. Das Wälzlager umfasst zu diesem Zweck einen Außenring 4, der mit der Nabe 7 der Windenergieanlage verbunden ist, und einen Innenring 3, der das Rotorblatt 6 trägt und dafür eingerichtet ist, sich mitsamt dem Rotorblatt 6 gegenüber der Nabe 7 zu drehen.

Das Wälzlager hat einen Durchmesser von etwa 6m.

Es wird darauf hingewiesen, dass in anderen Ausführungen das Rotorblatt 6 auch mit dem Außenring 4 verbunden sein kann während der Innenring 3 an der Nabe 3 fixiert ist. Der Innenring 3 und/oder der Außenring 4 können eine Verzahnung aufweisen.

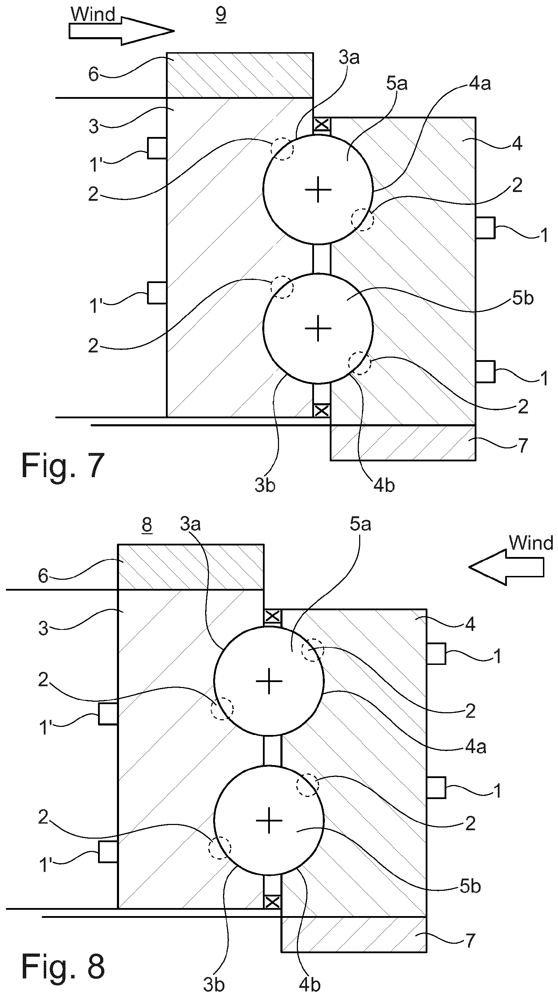

Das Wälzlager umfasst den Innenring 3, der eine Innenringlaufbahn 3a aufweist, und den Außenring 4 mit einer zu der Innenringlaufbahn 3a opponierenden Außenringlaufbahn 4a. Zwischen dem Innenring 3 und dem Außenring 4 sind Wälzkörper 5a angeordnet, die auf der Innenringlaufbahn 3a und der dazu opponierenden Außenringlaufbahn 4a abrollen. Bezüglich weiterer möglicher Ausgestaltungen des Wälzlagers wird insbesondere auch auf Figuren 7-9 verwiesen.

Anmeldungsgemäß ist mindestens eine Ultraschallsensoranordnung 1, 1' an dem Wälzlager angeordnet.

Im Beispiel von Fig. 1 umfasst das Wälzlager zwei Ultraschallsensoranordnungen 1, die an dem Außenring 4 angeordnet sind, eingerichtet zum Emittieren von Schallwellen durch ein Volumen des Außenrings 4 in Richtung der Außenringlaufbahn 4a und zum Empfangen von an der Außenringlaufbahn 4a reflektierten Schallwellen.

Die beiden Ultraschallsensoranordnungen 1 sind an radial entgegengesetzten Positionen an dem Außenring 3 angeordnet. In Bezug auf die in Fig. 1 eingezeichnete Windrichtung ist die rechte der beiden Ultraschallsensoranordnungen 1 an einer Zugseite 8 des Wälzlagers angeordnet, und die linke der beiden Ultraschallsensoranordnungen 1 ist an einer Druckseite 9 des Wälzlagers angeordnet. In der Figur 1 sind dabei Bereiche besonders hoher Belastung an Zugseite 8 und Druckseite 9 durch gestrichelte Linien gekennzeichnet. Die zwei Ultraschallsensoranordnungen 1 aus Fig. 1 ermöglichen also die Überwachung von für die Sicherheit der Windenergieanlage besonders wichtigen Punkten, insbesondere die Überwachung der Außenringlaufbahn 4a des Außenrings 4. Diese Überwachung findet insbesondere während des Betriebs der Windenergieanlage statt, insbesondere auch während das Rotorblatt 6 gedreht wird.

Fig. 2 zeigt einen ähnlichen Aufbau wie die Fig. 1, wobei nur eine einzige Ultraschallsensoranordnung 1 am Außenring 4 angeordnet ist, und zwar auf der Zugseite 8. Alternativ kann z.B. auch nur eine Ultraschallsensoranordnung auf der Druckseite 9 vorgesehen sein.

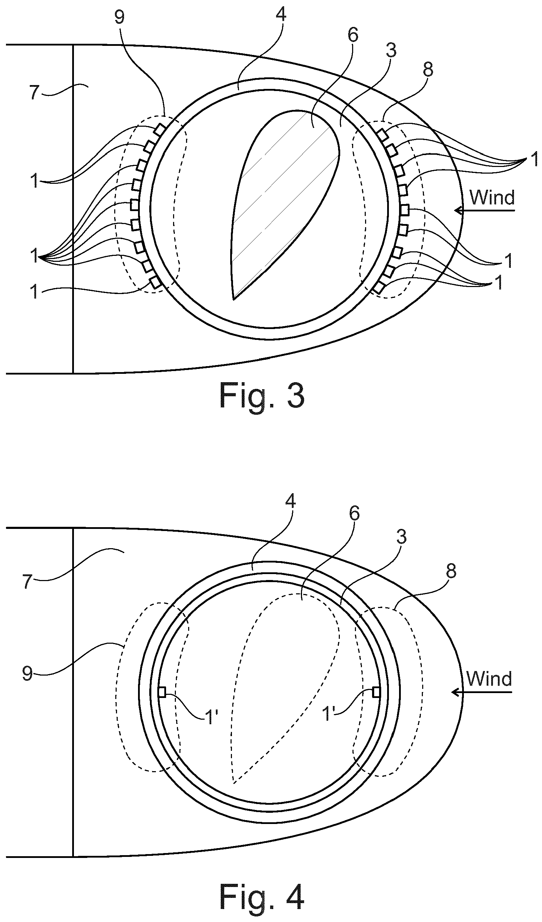

Fig. 3 zeigt ein Wälzlager, bei dem an der Zugseite 8 und an der Druckseite 9 jeweils neun Ultraschallsensoranordnungen 1 jeweils innerhalb ungefähr eines Vierteilkreises, also innerhalb von etwa 90°, angeordnet sind. Die neun Ultraschallsensoranordnungen 1 auf der Zugseite 8 liegen dabei den neun Sensoranordnungen 1 auf der Druckseite radial gegenüber. So wird insgesamt eine besonders präzise Überwachung der beiden Bereiche hoher Belastung ermöglicht.

Fig. 4 zeigt ein Wälzlager, bei dem zwei Ultraschallsensoranordnungen 1' an radial gegenüberliegenden Punkten an dem Innenring 3 angeordnet sind, eingerichtet zum Emittieren von Schallwellen durch ein Volumen des Innenrings 3 in Richtung der Innenringlaufbahn 3a und zum Empfangen von an der Innenringlaufbahn 3a reflektierten Schallwellen. Eine Position des Rotorblatts 6, das mit dem Innenring 3 verbunden ist, ist durch gestrichelte Linien gekennzeichnet. Eine der beiden Ultraschallvorrichtungen 1' ist dabei an einer Zugseite 8 und die andere an einer Druckseite 9 angeordnet. Damit können insbesondere Schäden an wichtigen Punkten der Innenringlaufbahn 3a überwacht werden.

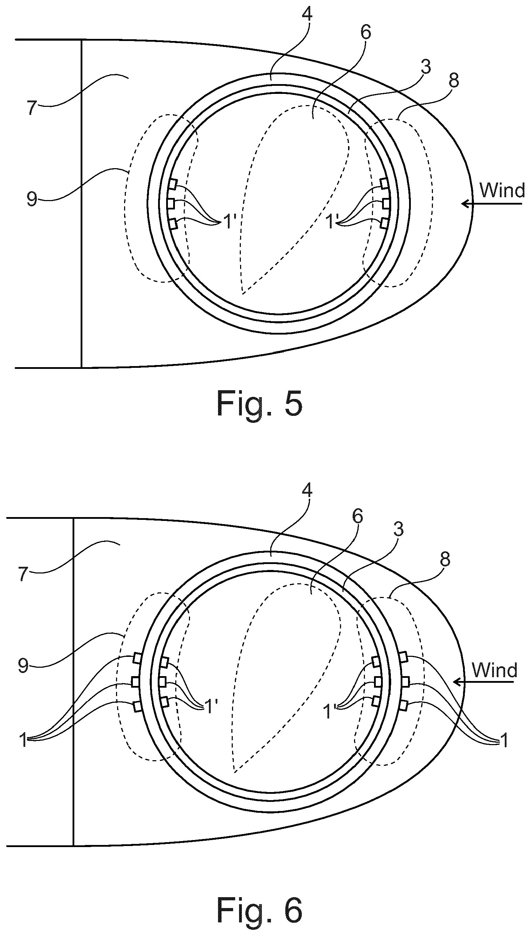

Fig. 5 zeigt einen ähnlichen Aufbau wie Fig. 4, wobei aber an der Zugseite 8 und an der Druckseite 9 jeweils drei Ultraschallsensoranordnungen 1' zur Überwachung von Abschnitten der Innenringlaufbahn 3a vorgesehen sind. Die drei Ultraschallsensoranordnungen 1' an Zugseite 8 und an Druckseite 9 sind dabei jeweils innerhalb von Kreisbögen von etwa 30° angeordnet.

Fig. 6 zeigt eine Ausführung des Wälzlagers, bei der sowohl am Innenring 3 mehrere Ultraschallsensoranordnungen 1' vorhanden sind, als auch am Außenring 4 mehrere Ultraschallsensoranordnungen 1 vorhanden sind, zur Überwachung beider Volumina und also von Abschnitten beider Laufbahnen 3a, 4a. Dabei sind für jeden Ring 3, 4 jeweils drei Ultraschallsensoranordnungen 1, 1' an der Zugseite 8 und jeweils drei Ultraschallsensoranordnungen 1' an der Druckseite 9 angeordnet.

Es können bei anmeldungsgemäßen Wälzlagern natürlich auch mehr als drei Ultraschallsensoranordnungen 1, 1' an Zugseite 8 und/oder Druckseite 9 jedes Ringes 3, 4 angeordnet werden.

Fig. 7 zeigt einen Schnitt durch die Druckseite 9 eines Wälzlagers, bei dem die Wälzkörper 5a, 5b als Kugeln ausgebildet sind. Der Innenring 3 trägt das Rotorblatt 6 und der Außenring 4 ist mit der Nabe 7 verbunden. Ein herrschender Wind strömt von links auf das Rotorblatt 6 und drückt das Rotorblatt oben nach rechts.

Der Innenring 3 weist eine erste Innenringlaufbahn 3a auf und der Außenring 4 eine zu der Innenringlaufbahn 3a gehörende erste Außenringlaufbahn 4a. Auf der ersten Innenringlaufbahn 3a und der ersten Außenringlaufbahn 4a rollen erste kugelförmige Wälzkörper 5a ab.

Unterhalb der ersten Laufbahnen 3a, 4a weist der Innenring 3 eine zweite Innenringlaufbahn 3b auf und der Außenring 4 eine zu der zweiten Innenringlaufbahn 3b komplementäre zweite Außenringlaufbahn 4b. Auf der zweiten Innenringlaufbahn 3b und der zweiten Außenringlaufbahn 4b rollen zweite kugelförmige Wälzkörper 5b ab.

Die erste Innenringlaufbahn 3a, die erste Außenringlaufbahn 4a, die zweite Innenringlaufbahn 3b und die zweite Außenringlaufbahn 4b werden dabei jeweils mit Hilfe von Ultraschallsensoranordnungen 1, 1' überwacht. Dabei ist für jede der Laufbahnen 3a, 3b, 4a, 4b eine speziell für die jeweilige Laufbahn 3a, 3b, 4a, 4b konfigurierte Ultraschallsensoranordnung vorgesehen.

Die Ultraschallsensoranordnungen 1' des Innenrings 3 sind dabei an einer Innenfläche des Innenrings 3 angeordnet und die Ultraschallsensoranordnungen 1 des Außenrings 4 sind an einer Außenfläche des Außenrings 4 angeordnet.

Aufgrund des von links eintreffenden Windes, der das Rotorblatt 6 oben nach rechts drückt, sind erwartete Schadenspositionen 2, an denen eine besonders starke Beanspruchung der Laufbahnen 3a, 3b, 4a, 4b stattfindet, außermittig, d.h. entlang der Achse des Lagers nach oben oder unten versetzt. Entsprechend sind die Ultraschallsensoranordnungen 1, 1' jeweils dafür eingerichtet, die Schallwellen in diese außermittigen Bereiche, der Innenringlaufbahn 3a und der Außenringlaufbahn 4a, in denen die erwarteten Schadenspositionen 2 liegen, zu emittieren und von dort reflektierte Schallwellen zu empfangen. Diesbezüglich emittieren also die Ultraschallsensoranordnungen 1', die am Innenring 3 angeordnet sind, in außermittige Laufbahnbereiche, die nach oben, hin zum Rotorblatt 6, versetzt sind, und die Ultraschallsensoranordnungen 1, die am Außenring 4 angeordnet sind, emittieren in außermittige Laufbahnbereich, die nach unten, vom Rotorblatt 6 weg, versetzt sind. So werden gezielt, die Bereiche größter Beanspruchung überwacht.

Entsprechend können z.B. anmeldungsgemäße Lager für andere Vorrichtungen oder Großgeräte, wie z.B. eine Tunnelbohrmaschine oder einen Kran, zur Überwachung von für die jeweilige Vorrichtung kritischen Bereichen der Lagerlaufbahnen eingerichtet sein.

Fig. 8 zeigt die Zugseite 8 des Wälzlagers aus Figur 7, die der Druckseite 9 aus Figur 7 radial entgegengesetzt ist. Auch hier emittieren die Ultraschallsensoranordnungen 1, 1' in außermittige Randbereiche. Da der Wind von rechts auf das Rotorblatt trifft und dieses somit an der gezeigten Stelle des Lagers nach links zieht, sind die Positionen der erwarteten Schadenspositionen 2 im Vergleich zu Figur 7 hier umgekehrt: Die Ultraschallsensoranordnungen 1', die am Innenring 3 angeordnet sind, emittieren in außermittige Laufbahnbereiche, die nach unten, weg vom Rotorblatt 6, versetzt sind, und die Ultraschallsensoranordnungen 1, die am Außenring 4 angeordnet sind, emittieren in außermittige Laufbahnbereich, die nach oben, hin zum Rotorblatt 6, versetzt sind.

Hier sind die Ultraschallsensoranordnungen 1, 1' wieder an der Außenfläche des Außenrings 4 und an der Innenfläche des Innenrings 3 angeordnet ist. Je nach zu Verfügung stehendem Bauraum kann z.B. auch eine Ultraschallsensoranordnung des Innenrings an der Unterseite des Innenrings und/oder eine Ultraschallsensoranordnung des Außenrings an der Oberseite des Außenrings angeordnet sein.

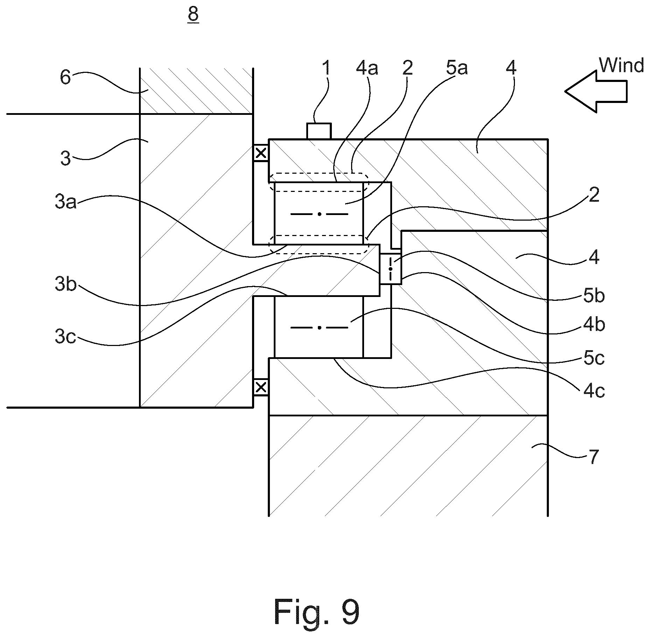

Fig. 9 zeigt einen Schnitt durch die Zugseite 8 eines Wälzlagers mit als Rollen ausgebildeten Wälzkörpern 5a, 5b, 5c.

Der Innenring 3 weist eine erste Innenringlaufbahn 3a auf und der Außenring 4 eine zu der ersten Innenringlaufbahn 3a gehörende erste Außenringlaufbahn 4a. Auf der ersten Innenringlaufbahn 3a und der ersten Außenringlaufbahn 4a rollen erste rollenförmige Wälzkörper 5a ab. Die erste Außenringlaufbahn 4a und die erste Innenringlaufbahn 3a erstrecken sich dabei in horizontaler Richtung, jeweils in einer Ebene orthogonal zu einer Achse des Wälzlagers, und die rollenförmigen Wälzkörper 5a haben dementsprechend Achsen, die sich ebenfalls orthogonal zur Achse des Wälzlagers erstrecken.

Der Innenring 3 weist eine zweite Innenringlaufbahn 3b auf und der Außenring 4 eine zu der zweiten Innenringlaufbahn 3b gehörende zweite Außenringlaufbahn 4b. Auf der zweiten Innenringlaufbahn 3b und der zweiten Außenringlaufbahn 4b rollen zweite rollenförmige Wälzkörper 5b ab. Die zweiten Laufbahnen 3b, 4b und die Achsen der zweiten rollenförmigen Wälzkörper 5b erstrecken sich parallel zur Achse des Wälzlagers.

Der Innenring 3 weist eine dritte Innenringlaufbahn 3c auf und der Außenring 4 weist eine zu der dritten Innenringlaufbahn 3c gehörende dritte Außenringlaufbahn 4c auf. Auf der dritten Innenringlaufbahn 3c und der dritten Außenringlaufbahn 4c rollen dritte rollenförmige Wälzkörper 5c ab. Die dritten Laufbahnen 3c, 4c und die Achsen der dritten rollenförmigen Wälzkörper 5c erstrecken sich wie die im Falle der ersten Laufbahnen 3a, 4a und ersten Wälzkörper 5a orthogonal zur Achse des Wälzlagers.

Die erste Außenringlaufbahn 4a wird dabei mit Hilfe von Ultraschallsensoranordnungen 1 überwacht. Aufgrund des von rechts eintreffenden Windes, der das Rotorblatt 6 oben nach links drückt, findet durch den Zug des Rotorblatts 6 insbesondere eine Beanspruchung der ersten Außenringlaufbahn 4a durch die ersten Wälzkörper 5a statt. Um die erwartete Schadensposition 2 an der ersten Außenringlaufbahn 4a zu überwachen, umfasst das Wälzlager an der gezeigten Zugseite 8 mindestens eine Ultraschallsensoranordnung 1, die an der dem Rotorblatt 6 zugewandten Oberseite des Außenrings 4 angeordnet ist und Schallwellen in Richtung der zu überwachenden ersten Außenringlaufbahn emittiert.

### Bezugszeichenliste

- 1, 1': Ultraschallsensor
- 2: Erwartete Schadensposition
- 3: Innenring
- 3a, 3b, 3c: Innenringlaufbahn
- 4: Außenring
- 4a, 4b, 4c: Außenringlaufbahn
- 5a, 5b, 5c: Wälzkörper
- 6: Rotorblatt
- 7: Nabe
- 8: Lastzone Zugseite
- 9: Lastzone Druckseite

## Patentansprüche

1. Wälzlager, umfassend
einen Innenring (3) mit einer Innenringlaufbahn (3a),
einen Außenring (4) mit einer zu der Innenringlaufbahn (3a) opponierenden Außenringlaufbahn (4a)
und zwischen dem Innenring (3) und dem Außenring (4) angeordnete Wälzkörper (5a), die auf der Innenringlaufbahn (3a) und der dazu opponierenden Außenringlaufbahn (4a) abrollen,
sowie mindestens eine Ultraschallsensoranordnung (1, 1'),
wobei
die mindestens eine Ultraschallsensoranordnung (1, 1') eine oder mehrere Ultraschallsensoranordnungen (1') umfasst, die an dem Innenring (3) angeordnet sind, eingerichtet zum Emittieren von Schallwellen durch ein Volumen des Innenrings (3) in Richtung der Innenringlaufbahn (3a) und zum Empfangen von an der Innenringlaufbahn (3a) reflektierten Schallwellen
und/oder wobei
die mindestens eine Ultraschallsensoranordnung (1, 1') eine oder mehrere Ultraschallsensoranordnungen (1) umfasst, die an dem Außenring (4) angeordnet sind, eingerichtet zum Emittieren von Schallwellen durch ein Volumen des Außenrings (4) in Richtung der Außenringlaufbahn (4a) und zum Empfangen von an der Außenringlaufbahn (4a) reflektierten Schallwellen,
**dadurch gekennzeichnet, dass**
es sich bei dem Wälzlager um ein Blattlager einer Windenergieanlage handelt, zum Einstellen eines Blattstellwinkels, wobei der Innenring (3) oder der Außenring (4) eingerichtet ist, mit einer Nabe (7) der Windenergieanlage verbunden zu werden und der jeweils andere von Innenring (3) und Außenring (4) dafür eingerichtet ist, ein Rotorblatt (6) der Windenergieanlage zu tragen und sich gegenüber der Nabe (7) zu drehen, und
wobei die mindestens eine Ultraschallsensoranordnung (1, 1') mindestens 6 Ultraschallsensoranordnungen (1, 1') umfasst, die innerhalb eines ersten Kreisbogens von höchstens 70° angeordnet sind wobei der Kreisbogen an der Zugseite oder an der Druckseite des Wälzlagers liegt.

2. Wälzlager nach Anspruch 1, wobei die eine oder die mehreren Ultraschallsensoranordnungen (1'), die an dem Innenring (3) angeordnet sind, eingerichtet sind zum Überwachen einer Beschaffenheit der Innenringlaufbahn (3a) und/oder zum Überwachen einer Materialdicke des Innenrings (3)
und/oder
wobei die eine oder die mehreren Ultraschallsensoranordnungen (1), die an dem Außenring (4) angeordnet sind, eingerichtet sind zum Überwachen einer Beschaffenheit der Außenringlaufbahn (4a) und/oder zum Überwachen einer Materialdicke des Außenrings (4).

3. Wälzlager nach einem der vorhergehenden Ansprüche, wobei ein Durchmesser des Wälzlagers mindestens 1m oder mindestens 2m oder mindestens 3m oder mindestens 5m oder mindestens 6m beträgt.

4. Wälzlager nach einem der vorhergehenden Ansprüche, wobei die mindestens eine Ultraschallsensoranordnung (1, 1') zwei Ultraschallsensoranordnungen (1') umfasst, die an radial entgegengesetzten Positionen an dem Innenring (3) angeordnet sind und/oder wobei die mindestens eine Ultraschallsensoranordnung (1, 1') zwei Ultraschallsensoranordnungen (1) umfasst, die an radial entgegengesetzten Positionen an dem Außenring (3) angeordnet sind.

5. Wälzlager nach einem der vorhergehenden Ansprüche, wobei mehrere Ultraschallsensoranordnungen im Abstand von mindestens 3° und von höchstens 5° voneinander angeordnet sind.

6. Wälzlager nach einem der vorhergehenden Ansprüche, wobei die mindestens eine Ultraschallsensoranordnung (1, 1') zusätzlich mindestens 3 oder mindestens 4 oder mindestens 5 oder mindestens 6 weitere Ultraschallsensoranordnungen (1, 1') umfasst, die innerhalb eines zweiten Kreisbogens von höchstens 120° oder höchstens 90° oder höchstens 70° angeordnet sind, wobei insbesondere der zweite Kreisbogen dem ersten Kreisbogen radial gegenüberliegt.

7. Wälzlager nach einem der vorhergehenden Ansprüche, wobei der Innenring (3) und/oder der Außenring (4) eine Verzahnung aufweist.

8. Wälzlager nach einem der vorhergehenden Ansprüche, wobei die mindestens eine Ultraschallsensoranordnung (1, 1') zumindest eine Ultraschallsensoranordnung (1, 1') umfasst, die an einer Außenfläche des Außenrings (4) und/oder an einer Innenfläche des Innenrings (3) angeordnet ist.

9. Wälzlager nach einem der vorhergehenden Ansprüche, wobei die mindestens eine Ultraschallsensoranordnung (1, 1') zumindest eine Ultraschallsensoranordnung (1, 1') umfasst, die an einer Oberseite oder einer Unterseite des Innenrings (3) und/oder an einer Oberseite oder einer Unterseite des Außenrings (4) angeordnet ist.

10. Wälzlager nach einem der vorhergehenden Ansprüche, wobei die mindestens eine Ultraschallsensoranordnung (1, 1') zumindest eine Ultraschallsensoranordnung (1, 1') umfasst, die dafür eingerichtet ist, Schallwellen in einen außermittigen Bereich, insbesondere in einen Randbereich, der Innenringlaufbahn (3a) oder der Außenringlaufbahn (4a) zu emittieren und von dort reflektierte Schallwellen zu empfangen.

11. Windenergieanlage, umfassend ein Wälzlager nach einem der vorhergehenden Ansprüche, wobei die mindestens eine Ultraschallsensoranordnung (1, 1') zumindest eine Ultraschallsensoranordnung (1, 1') umfasst, die an einer Zugseite (8) des Wälzlagers angeordnet ist und zumindest eine Ultraschallsensoranordnung (1, 1') umfasst, die an einer Druckseite (9) des Wälzlagers angeordnet ist.

12. Windenergieanlage nach Anspruch 11, wobei die Wälzkörper (5) als Rollen ausgebildet sind und die mindestens eine Ultraschallsensoranordnung (1, 1') zumindest eine Ultraschallsensoranordnung (1, 1') umfasst, die an einer Zugseite (8) oder einer Druckseite (9) des Wälzlagers angeordnet ist.

13. Windenergieanlage nach Anspruch 11, wobei die Wälzkörper (5) als Kugeln ausgebildet sind, wobei die mindestens eine Ultraschallsensoranordnung (1, 1') zumindest eine Ultraschallsensoranordnung (1, 1') umfasst, die an einer Zugseite des Wälzlagers angeordnet ist und zumindest eine Ultraschallsensoranordnung (1, 1') umfasst, die an einer Druckseite des Wälzlagers angeordnet ist.

14. Verfahren zum Überwachen einer Windenergieanlage, die ein Wälzlager nach einem der vorhergehenden Ansprüche 1 bis 10 als Blattlager aufweist, oder einer Windenergieanlage nach einem der vorhergehenden Ansprüche 11 bis 13, wobei die Innenringlaufbahn (3a) des Innenrings (3) und/oder die Außenringlaufbahn (4a) des Außenrings (4) überwacht wird.

15. Verfahren nach Anspruch 14, wobei die Überwachung im Betrieb stattfindet und/oder während das Wälzlager gedreht wird.

## Claims

1. A roller bearing, comprising:
an inner ring (3) with an inner ring raceway (3a),
an outer ring (4) with an outer ring raceway (4a) opposing the inner ring raceway (3a)
and rolling elements (5a) arranged between the inner ring (3) and the outer ring (4), which roll on the inner ring raceway (3a) and the opposing outer ring raceway (4a),
and at least one ultrasonic sensor arrangement (1, 1'),
wherein
the at least one ultrasonic sensor arrangement (1, 1') comprises one or more ultrasonic sensor arrangements (1') arranged on the inner ring (3), configured to emit sound waves through a volume of the inner ring (3) in the direction of the inner ring raceway (3a) and to receive sound waves reflected at the inner ring raceway (3a)
and/or wherein
the at least one ultrasonic sensor arrangement (1, 1') comprises one or more ultrasonic sensor arrangements (1) which are arranged on the outer ring (4), configured for emitting sound waves through a volume of the outer ring (4) in the direction of the outer ring raceway (4a) and for receiving sound waves reflected at the outer ring raceway (4a),
**characterized in that** the roller bearing is a blade bearing of a wind turbine for adjusting a blade pitch angle, wherein the inner ring (3) or the outer ring (4) is configured to be connected to a hub (7) of the wind turbine and the other of the inner ring (3) and the outer ring (4) is configured to support a rotor blade (6) of the wind turbine and to rotate relative to the hub (7), and
wherein the at least one ultrasonic sensor arrangement (1, 1') comprises at least 6 ultrasonic sensor arrangements (1, 1') which are arranged within a first circular arc of at most 70°, the circular arc being located on the tension side or on the compression side of the roller bearing.

2. The roller bearing according to claim 1, wherein the one or more ultrasonic sensor arrangements (1'), which are arranged on the inner ring (3), are configured for monitoring a condition of the inner ring raceway (3a) and/or for monitoring a material thickness of the inner ring (3)
and/or
wherein the one or more ultrasonic sensor arrangements (1), which are arranged on the outer ring (4), are configured for monitoring a condition of the outer ring raceway (4a) and/or for monitoring a material thickness of the outer ring (4).

3. The roller bearing according to one of the preceding claims, wherein a diameter of the roller bearing is at least 1m or at least 2m or at least 3m or at least 5m or at least 6m.

4. The roller bearing according to one of the preceding claims, wherein the at least one ultrasonic sensor arrangement (1, 1') comprises two ultrasonic sensor arrangements (1') which are arranged at radially opposite positions on the inner ring (3) and/or wherein the at least one ultrasonic sensor arrangement (1, 1') comprises two ultrasonic sensor arrangements (1) which are arranged at radially opposite positions on the outer ring (3).

5. The roller bearing according to one of the preceding claims, wherein several ultrasonic sensor arrangements are arranged at a distance of at least 3° and at most 5° from one another.

6. The roller bearing according to one of the preceding claims, wherein the at least one ultrasonic sensor arrangement (1, 1') additionally comprises at least 3 or at least 4 or at least 5 or at least 6 further ultrasonic sensor arrangements (1, 1'), which are arranged within a second circular arc of at most 120° or at most 90° or at most 70°, wherein in particular the second circular arc lies radially opposite the first circular arc.

7. The roller bearing according to one of the preceding claims, wherein the inner ring (3) and/or the outer ring (4) has a toothing.

8. The roller bearing according to one of the preceding claims, wherein the at least one ultrasonic sensor arrangement (1, 1') comprises at least one ultrasonic sensor arrangement (1, 1') which is arranged on an outer surface of the outer ring (4) and/or on an inner surface of the inner ring (3).

9. The roller bearing according to one of the preceding claims, wherein the at least one ultrasonic sensor arrangement (1, 1') comprises at least one ultrasonic sensor arrangement (1, 1') arranged on an upper side or a lower side of the inner ring (3) and/or on an upper side or a lower side of the outer ring (4).

10. The roller bearing according to one of the preceding claims, wherein the at least one ultrasonic sensor arrangement (1, 1') comprises at least one ultrasonic sensor arrangement (1, 1') which is configured to emit sound waves into an eccentric region, in particular into an edge region, of the inner ring raceway (3a) or the outer ring raceway (4a) and to receive sound waves reflected from there.

11. A wind turbine comprising a roller bearing according to one of the preceding claims, wherein the at least one ultrasonic sensor arrangement (1, 1') comprises at least one ultrasonic sensor arrangement (1, 1') arranged on a tension side (8) of the roller bearing and at least one ultrasonic sensor arrangement (1, 1') arranged on a compression side (9) of the roller bearing.

12. The wind turbine according to claim 11, wherein the rolling elements (5) are designed as rollers and the at least one ultrasonic sensor arrangement (1, 1') comprises at least one ultrasonic sensor arrangement (1, 1') which is arranged on a tension side (8) or a compression side (9) of the roller bearing.

13. The wind turbine according to claim 11, wherein the rolling elements (5) are designed as balls, wherein the at least one ultrasonic sensor arrangement (1, 1') comprises at least one ultrasonic sensor arrangement (1, 1') which is arranged on a tension side of the roller bearing and comprises at least one ultrasonic sensor arrangement (1, 1') which is arranged on a compression side of the roller bearing.

14. A method for monitoring a wind turbine which has a roller bearing according to one of the preceding claims 1 to 10 as a blade bearing, or a wind turbine according to one of the preceding claims 11 to 13,
wherein the inner ring raceway (3a) of the inner ring (3) and/or the outer ring raceway (4a) of the outer ring (4) is monitored.

15. The method according to claim 14, wherein the monitoring takes place during operation and/or while the roller bearing is being rotated.

## Revendications

1. Palier à roulement, comprenant
une bague interne (3) avec un chemin de roulement de bague interne (3a),
une bague externe (4) avec un chemin de roulement de bague externe (4a) opposé au chemin de roulement de bague interne (3a)
et des éléments roulants (5a) agencés entre la bague interne (3) et la bague externe (4), qui roulent sur le chemin de roulement de bague interne (3a) et sur le chemin de roulement de bague externe (4a) opposé au chemin de roulement de bague interne,
et au moins un ensemble capteur ultrasonore (1, 1'),
dans lequel
le au moins un ensemble capteur ultrasonore (1,1') comprend un ou plusieurs ensembles capteur ultrasonore (1') qui sont agencés sur la bague interne (3), configurés pour émettre des ondes sonores à travers un volume de la bague interne (3) dans la direction du chemin de roulement de bague interne (3a) et pour recevoir des ondes sonores réfléchies par le chemin de roulement de bague interne (3a)
et/ou dans lequel
le au moins un ensemble capteur ultrasonore(1, 1') comprend un ou plusieurs ensembles capteur ultrasonore (1) qui sont agencés sur la bague externe (4), configurés pour émettre des ondes sonores à travers un volume de la bague externe (4) dans la direction du chemin de roulement de bague externe (4a) et pour recevoir des ondes sonores réfléchies par le chemin de roulement de bague externe (4a),
**caractérisé en ce que** le palier à roulement est un roulement de pale d'une éolienne servant à ajuster l'angle de calage d'une pale, dans lequel la bague interne (3) ou la bague externe (4) est configurée pour être reliée à un moyeu (7) de l'éolienne et l'autre partie de la bague interne (3) ou de la bague externe (4) est configurée pour supporter une pale de rotor (6) de l'éolienne et pour tourner par rapport au moyeu (7), et
dans lequel le au moins un ensemble capteur ultrasonore (1,1') comprend au moins 6 ensembles capteur ultrasonore (1,1') qui sont agencés dans un premier arc circulaire d'au plus 70°, dans lequel l'arc circulaire est situé sur un côté de tension ou un côté de compression du palier à roulement.

2. Palier à roulement selon la revendication 1, dans lequel les un ou plusieurs ensembles capteur ultrasonore (1') sont agencés sur la bague interne (3), sont configurés pour surveiller la texture du chemin de roulement de bague interne (3a) et/ou pour surveiller l'épaisseur de matériau de la bague interne (3)
et/ou
dans lequel les un ou plusieurs ensembles capteur ultrasonore (1') qui sont agencés sur la bague externe (4) sont configurés pour surveiller la texture du chemin de roulement de bague externe (4a) et/ou pour surveiller l'épaisseur de matériau de la bague externe (4).

3. Palier à roulement selon l'une des revendications précédentes, dans lequel un diamètre du palier à roulement est d'au moins 1 m ou d'au moins 2 m ou d'au moins 3 m ou d'au moins 5 m ou d'au moins 6 m.

4. Palier à roulement selon l'une des revendications précédentes, dans lequel le au moins un ensemble capteur ultrasonore (1,1') comprend deux ensembles capteur ultrasonore (1') qui sont agencés à des positions radialement opposées sur la bague interne (3) et/ou dans lequel au moins un ensemble capteur ultrasonore (1,1') comprend deux ensembles capteur ultrasonore (1) qui sont agencés à des positions radialement opposées sur la bague externe (3).

5. Palier à roulement selon l'une des revendications précédentes, dans lequel plusieurs ensembles capteur ultrasonore qui sont agencés à une distance d'au moins 3° et d'au plus 5° les uns des autres.

6. Palier à roulement selon l'une des revendications précédentes, dans lequel le au moins un ensemble capteur ultrasonore (1,1') comprend en outre au moins 3 ou au moins 4 ou au moins 5 ou au moins 6 ensembles capteur ultrasonore supplémentaires (1,1') qui sont agencés dans un second arc de cercle d'au plus 120° ou d'au plus 90° ou d'au plus 70°, dans lequel en particulier le second arc de cercle est radialement opposé au premier arc de cercle.

7. Palier à roulement selon l'une des revendications précédentes, dans lequel la bague interne (3) et/ou la bague externe (4) présente une denture.

8. Palier à roulement selon l'une des revendications précédentes, dans lequel le au moins un ensemble capteur ultrasonore (1,1') comprend au moins un ensemble capteur ultrasonore (1,1') qui est agencé sur une surface extérieure de la bague externe (4) et/ou sur une surface intérieure de la bague interne (3).

9. Palier à roulement selon l'une des revendications précédentes, dans lequel le au moins un ensemble capteur ultrasonore (1,1') comprend au moins un ensemble capteur ultrasonore (1,1') qui est agencé sur un côté supérieur ou un côté inférieur de la bague externe (3) et/ou sur un côté supérieur ou un côté inférieur de la bague interne (4).

10. Palier à roulement selon l'une des revendications précédentes, dans lequel le au moins un ensemble capteur ultrasonore (1,1') comprend au moins un ensemble capteur ultrasonore (1,1') qui est configuré pour émettre des ondes sonores dans une zone excentrée, en particulier dans une zone de bord, du chemin de roulement de bague interne (3a) ou du chemin de roulement de bague externe (4a) et pour recevoir les ondes sonores réfléchies par celle-ci.

11. Éolienne comprenant un palier à roulement selon l'une des revendications précédentes, dans lequel le au moins un ensemble capteur ultrasonore (1,1') comprend au moins un ensemble capteur ultrasonore (1,1') qui est agencé sur un côté de tension (8) du palier à roulement et comprend au moins un ensemble capteur ultrasonore (1,1') qui est agencé sur un côté de compression (9) du palier à roulement.

12. Éolienne selon la revendication 11, dans lequel les éléments roulants (5) sont conçus comme des rouleaux et le au moins un ensemble capteur ultrasonore (1,1') comprend au moins un ensemble capteur ultrasonore (1,1') agencé sur un côté de tension (8) ou un côté de compression (9) du palier à roulement.

13. Éolienne selon la revendication 11, dans lequel les éléments roulants (5) sont conçus comme des sphères, dans lequel le au moins un ensemble capteur ultrasonore (1,1') comprend au moins un ensemble capteurs ultrasonore (1,1') qui est agencé sur le côté de tension du palier à roulement et comprend au moins un ensemble capteur ultrasonore (1,1') qui est agencé sur le côté de compression du palier à roulement.

14. Procédé de surveillance d'une éolienne qui présente un palier à roulement selon l'une des revendications précédentes 1 à 10 en tant que palier de pale, ou d'une éolienne selon l'une des revendications précédentes 11 à 13,
dans lequel le chemin de roulement de bague interne (3a) de la bague interne (3) et/ou le chemin de roulement de bague externe (4a) de la bague externe (4) est surveillé.

15. Procédé selon la revendication 14, dans lequel la surveillance a lieu pendant le fonctionnement et/ou pendant la rotation du palier à roulement.
